# EUROPÄISCHE PATENTSCHRIFT

(11) **EP 2 550 696 B1**
(45) Veröffentlichungstag und Bekanntmachung des Hinweises auf die Patenterteilung: **13.04.2016**
(21) Anmeldenummer: 10795936.3
(22) Anmeldetag: 08.12.2010
(51) Int. Cl.: H01M 2/10

(54) **ZELLVERBUND MIT EINER VORGEBBAREN ANZAHL VON PARALLEL UND/ODER SERIELL MITEINANDER ELEKTRISCH VERSCHALTETEN EINZELZELLEN**
CELL ASEMBLY HAVING A PREDETERMINED NUMBER OF INDIVIDUAL CELLS WHICH ARE ELECTRICALLY CONNECTED IN PARALLEL AND/OR IN SERIES WITH ONE ANOTHER
ENSEMBLE D'ÉLÉMENTS COMPRENANT UN NOMBRE DÉTERMINABLE D'ÉLÉMENTS INDIVIDUELS ÉLECTRIQUEMENT COUPLÉS EN SÉRIE ET/OU EN PARALLÈLE

(30) Priorität: 26.03.2010 DE 102010012936
(43) Veröffentlichungstag der Anmeldung: 30.01.2013
(73) Patentinhaber: Daimler AG, 70327 Stuttgart (DE)
(72) Erfinder: SCHRÖTER, Dirk, 71364 Winnenden (DE); MEINTSCHEL, Jens, 02994 Bernsdorf (DE)
(74) Vertreter: JENSEN & SON
(86) Internationale Anmeldenummer: PCT/EP2010/007457
(87) Internationale Veröffentlichungsnummer: WO 2011/116803

(56) Entgegenhaltungen:
- DE-A1- 2 925 248
- US-A1- 2010 026 609

## Beschreibung

Die Erfindung betrifft einen Zellverbund mit einer vorgebbaren Anzahl von parallel und/oder seriell miteinander elektrisch verschalteten Einzelzellen gemäß dem Oberbegriff des Patentanspruchs 1.

Batterien für Fahrzeuganwendungen, insbesondere für Hybridanwendungen, bestehen aus mehreren in Reihe und/oder parallel geschalteten Einzelzellen, auch als Zellverbund bezeichnet, welche sich meist mit einer zugehörigen Elektronik und Vorrichtungen zur Kühlung in einem gemeinsamen Batteriegehäuse befinden. Die Pole der Einzelzellen können beispielsweise direkt durch Gehäuseteile durch mit diesen verbundene Stromleiterfahnen oder durch Polkontakte, so genannte Anschlussterminals, gebildet sein.

Herkömmliche Batterien können unter starker Belastung oder bei Überlastung (z. B. bei Überladung oder zu hohem Entladestrom, beispielsweise bei einem Kurzschluss) im Schadensfall (z. B. Unfall, Elektrolytzersetzung) oder sogar im Normalbetrieb bei starker Erhitzung von außen in einen thermisch unkontrollierbaren Zustand geraten. Dabei können sie überhitzen, einen gefährlichen inneren Druck (auch Zelleninnendruck genannt) bis hin zum Bersten oder Explodieren der Zelle und des Gehäuses aufbauen, wodurch gefährliche Stoffe freigesetzt werden. Speziell im Bereich moderner Lithium- oder Lithium-Ionen-Batterien besteht eine besondere Gefährdung, da diese Batterien flüssige, brennbare, organische Elektrolyte enthalten. Diese Batterien können unter ungünstigen Umständen in Brand geraten und stellen ein sicherheitstechnisches Problem dar. Deshalb sind in herkömmlichen Batterien Sicherheitsventile integriert, die einen Überdruck der Batterie kontrolliert ablassen und die bei einer Auslösung einen Brand oder eine thermische Zerstörung der Batterie verhindern sollen. Dadurch wird eine herkömmliche Batterie irreversibel beschädigt und muss ausgetauscht werden.

Der Erfindung liegt die Aufgabe zugrunde, einen verbesserten Zellverbund mit einer vorgebbaren Anzahl von parallel und/oder seriell miteinander elektrisch verschalteten Einzelzellen anzugeben.

Die Aufgabe wird erfindungsgemäß durch die im Anspruch 1 angegebenen Merkmale gelöst.

Vorteilhafte Weiterbildungen der Erfindung sind Gegenstand der Unteransprüche.

Beim erfindungsgemäßen Zellverbund mit einer vorgebbaren Anzahl von parallel und/oder seriell miteinander elektrisch verschalteten Einzelzellen ist erfindungsgemäß eine Kraftmesseinrichtung im Zellverbund integriert.

Mittels der integrierten Kraftmesseinrichtung ist sichergestellt, dass eine aufgrund einer Belastung oder Überlastung der Batterie resultierende Erhöhung des Zellinnendrucks sicher detektiert ist.

Wird durch die Kraftmesseinrichtung ein erhöhter Zellinnendruck detektiert, kann die Batterie vorteilhafterweise von den Verbrauchern und/oder einer Ladeelektronik getrennt werden.

Dadurch kann die Batterie sicherer und permanent näher an ihrer Leistungsgrenze betrieben werden.

Durch die Trennung der Batterie von den Verbrauchern und/oder der Ladeelektronik bei Detektion des erhöhten Zellinnendrucks ist ein Brand oder eine Explosion der Batterie sicher vermieden. Batterien, insbesondere Lithium- oder Lithium-Ionen-Batterien, enthalten flüssige, brennbare, organische Elektrolyte, wodurch diese Batterien bei einem Austritt dieser Elektolyte, beispielsweise durch ein Bersten der Batterie infolge des überhöhten Zellinnendrucks, in Brand geraten können.

Ausführungsbeispiele der Erfindung werden anhand von Zeichnungen näher erläutert.

Dabei zeigen:
- Fig. 1: schematisch eine perspektivische Ansicht eines Zellverbunds mit einer Kraftmesseinrichtung,
- Fig. 2: schematisch eine Schnittdarstellung der stirnseitigen Anordnung der Kraftmesseinrichtung,
- Fig. 3: schematisch eine Schnittdarstellung eines Zugankers und der Tellerfederpakete, und
- Fig. 4: schematisch eine Schnittdarstellung eines Zellverbunds aus Pouchzellen mit zentraler Kraftmesseinrichtung.

Einander entsprechende Teile sind in allen Figuren mit den gleichen Bezugszeichen versehen.

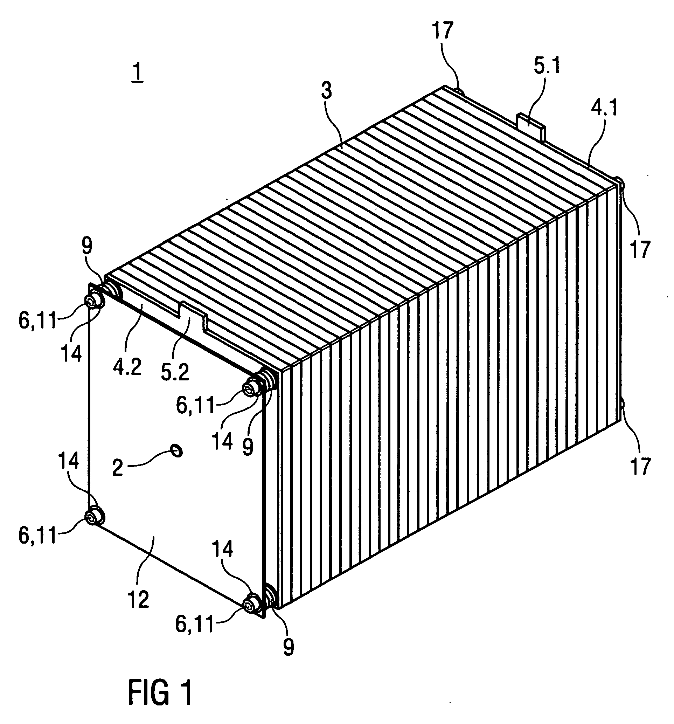

In Figur 1 ist schematisch eine perspektivische Ansicht des Zellverbunds 1 mit einer stirnseitig zentral angeordneten Kraftmesseinrichtung 2 dargestellt.

Hochvolt-Batterien für Fahrzeuganwendungen bestehen aus einer Mehrzahl von in Reihe und/oder parallel geschalteten Einzelzellen 3, die mit der dazugehörenden Elektronik und Kühlung in einem gemeinsamen Batteriegehäuse angeordnet sind. Eine besonders hohe Bauraumausnutzung ist mit Flachzellen möglich. Diese werden zur Bildung des Zellverbunds 1 beispielsweise seitlich nebeneinander angeordnet.

In einer möglichen Ausführungsform sind zwischen den Einzelzellen 3 Wärmeleitbleche angeordnet.

Die Einzelzellen 3 sind vorzugsweise als bipolare Rahmenflachzellen ausgebildet.

Zur mechanischen Bildung des Zellverbunds 1 und zur elektrischen Reihenschaltung werden die bipolaren Rahmenflachzellen nebeneinander angeordnet. An den beiden Stirnseiten des Zellverbunds 1 sind so genannte Polplatten 4.1 und 4.2 angeordnet.

An den Polplatten 4.1 und 4.2 ist jeweils eine Ableiterfahne als Hochvolt-Anschluss 5.1 und 5.2 des Zellverbunds 1 angeordnet.

Die zwischen den Polplatten 4.1 und 4.2 angeordneten Einzelzellen 3 werden durch eine gegensätzliche Krafteinwirkung auf die beiden Polplatten 4.1 und 4.2, wobei die auf die Polplatte 4.1 wirkende Kraft in Richtung der Polplatte 4.2 gerichtet ist und die auf die Polplatte 4.2 wirkende Kraft in Richtung der Polplatte 4.1 gerichtet ist, verpresst.

Als Mittel zur Erzeugung dieser Kraft ist beispielsweise zumindest ein nicht näher dargestelltes Spannband um den Zellverbund 1 angeordnet.

Eine weitere vorteilhafte Ausführungsform ist die Anordnung mehrerer Zuganker 6 im Zellverbund 1.

Dazu ist in jeder der vier Ecken der beispielsweise quadratisch oder rechteckig ausgeformten Einzelzelle 3 randseitig eine Aussparung 7 angeordnet. In jeder Einzelzelle 3 des Zellverbunds 1 sind die Aussparungen 7 derart an derselben Position angeordnet, dass bei der seitlichen Nebeneinanderanordnung der Einzelzellen 3 zum Zellverbund 1 die jeweiligen Aussparungen 7 der Einzelzellen 3 deckungsgleich angeordnet sind.

Die Aussparungen 7 sind derart korrespondierend zu einem Außenumfang des Zugankers 6 ausgebildet, dass in deckungsgleich angeordneten Aussparungen 7 jeweils ein Zuganker 6 einführbar und anordenbar ist.

Die korrespondierend zu den Außenabmessungen der Einzelzellen 3 quadratisch oder rechteckig ausgeformten Polplatten 4.1 und 4.2 weisen ebenfalls randseitige Aussparungen 8 auf, welche korrespondierend zu einem Außenumfang des Zugankers 6 ausgebildet sind und deckungsgleich zu den jeweiligen Aussparungen 7 der Einzelzellen 3 angeordnet sind.

An einer Stirnseite des Zellverbunds 1 ist eine Druckplatte 12 angeordnet. Diese Druckplatte 12 ist korrespondierend zu den Einzelzellen 3 und zu den Polplatten 4.1 und 4.2 quadratisch oder rechteckig ausgeformt und weist randseitige Aussparungen 13 auf, welche korrespondierend zu einem Außenumfang des Zugankers 6 ausgebildet sind und deckungsgleich zu den jeweiligen Aussparungen 7 der Einzelzellen 3 und den Aussparungen 8 der Polplatten 4.1 und 4.2 angeordnet sind.

In einer möglichen Ausführungsform ist in den Aussparungen 7 und 8 eine Hülse 10 angeordnet. Dabei sind die Aussparungen 7 und 8 korrespondierend zu einem Außenumfang der Hülse 10 ausgebildet und der Innendurchmesser der Hülse 10 ist derart im Vergleich zum Außendurchmesser des Zugankers 6 vergrößert ausgebildet, dass der Zuganker 6 in der Hülse 10 anordenbar ist.

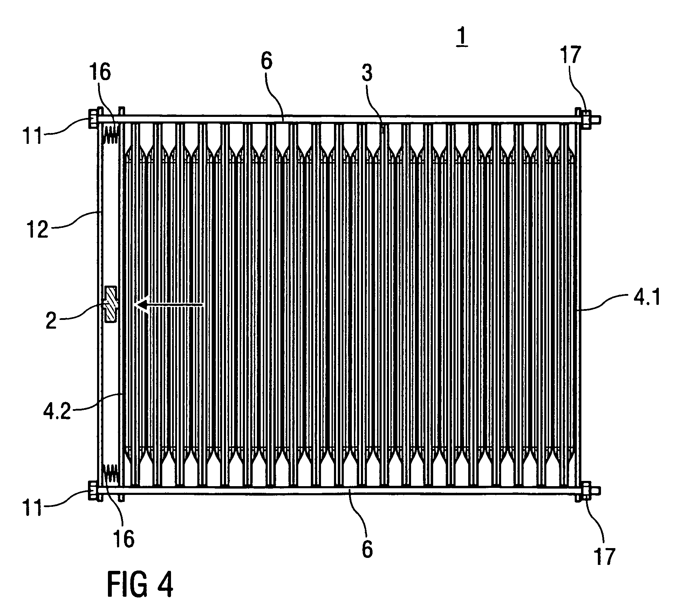

Der Zuganker 6 weist an seinem einen Ende einen herkömmlichen Schraubenkopf 11, beispielsweise einen Sechskantschraubenkopf oder einen Inbusschraubenkopf, auf. Am gegenüberliegenden Ende ist der Zuganker 6 nicht näher dargestellt mit einem Außengewinde versehen. Dieses Außengewinde ist korrespondierend zu einem Innengewinde einer herkömmlichen Mutter 17, welche in Figur 4 dargestellt ist, ausgebildet.

In einem montierten Zustand des Zellverbunds 1 sind die Einzelzellen 3 deckungsgleich aneinander gereiht und die Polplatten 4.1 und 4.2 sind jeweils stirnseitig am Zellverbund 1 angeordnet. An der Polplatte 4.2 ist die Druckplatte 12 angeordnet. In den deckungsgleich angeordneten Aussparungen 7, 8 und 13 sind die Zuganker 6 angeordnet. Dabei sind die Einzelzellen 3 und die Polplatte 4.2 verschiebbar auf den Zugankern 6 gehalten. Zwischen dem Schraubenkopf 11 des Zugankers 6 und der Druckplatte 12 ist eine herkömmliche Unterlegscheibe 14 angeordnet. Nach der Anordnung der Polplatten 4.1 und 4.2, der Einzelzellen 3 und der Druckplatte 12 auf den Zugankern 6 werden die herkömmlichen Muttern 17 auf das mit dem Außengewinde ausgebildete Ende der Zuganker 6 aufgeschraubt. Somit ist der Zellverbund 1 zwischen den vier Zugankern 6 sicher verpresst und gehalten.

Jeweils mehrere auf der Achse der Zuganker 6 angeordnete Tellerfedern 9, welche auch als Tellerfederpaket ausgebildet sein können, ermöglichen die axiale Verpressung der Einzelzellen 3. In einem montierten Zustand des Zellverbunds 1 werden die Einzelzellen 3 und die Polplatten 4.1 und 4.2 von den Tellerfedern 9, welche sich an der Druckplatte 12 abstützen, mit einer definierten Kraft gegeneinander verpresst. Am oberen und am unteren Ende der Tellerfeder 9 und/oder des Tellerfedernpakets ist jeweils eine Zentriereinrichtung 15 angeordnet. Diese zwei Zentriereinrichtungen 15 sind zum einen zwischen der Druckplatte 12 und dem der Druckplatte 12 zugewandten Ende der Tellerfeder 9 und zum anderen zwischen der Polplatte 4.2 und dem der Polplatte 4.2 zugewandten Ende der Tellerfeder 9 angeordnet und zentrieren die Tellerfeder 9. Die Zentriereinrichtung 15 ist als eine Unterlegscheibe mit einem umlaufenden Rand ausgebildet, wobei ein Innendurchmesser des umlaufenden Rands der Zentriereinrichtung 15 mit einem Außendurchmesser der Tellerfeder 9 korrespondiert und der umlaufende Rand der Zentriereinrichtung 15 jeweils in Richtung der Tellerfeder 9 ausgerichtet ist.

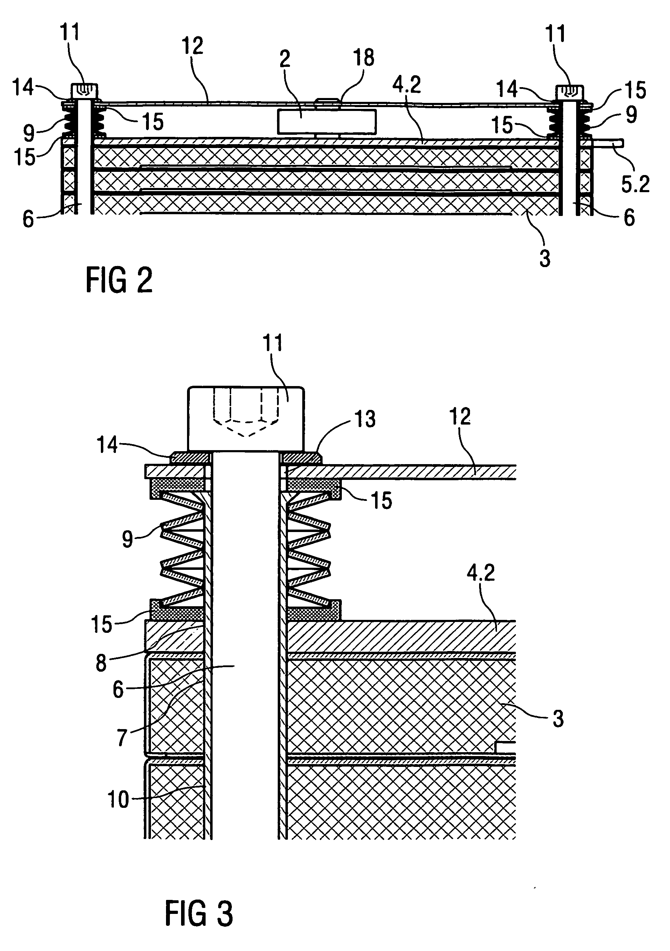

In Figur 2 ist schematisch eine Schnittdarstellung der stirnseitigen Anordnung der Kraftmesseinrichtung 2 im Zellverbund 1 dargestellt.

In Figur 3 ist schematisch eine Schnittdarstellung des Zugankers 6 und der Tellerfedern 9 dargestellt.

In einer alternativen Ausführungsform der Erfindung sind die Tellerfedern 9, in Figur 4 dargestellt, als Schraubenfeder 16 ausgebildet.

Bei Überladung oder Kurzschluss einer Einzelzelle 3 entsteht ein Überdruck im Inneren der Einzelzelle 3. Um eine exotherme Kettenreaktion, auch als thermal runaway bezeichnet, und/oder eine Explosion innerhalb der Einzelzelle 3 zu verhindern, muss der Überdruck in der Einzelzelle 3 entweder ab Überschreitung einer definierten Grenze kontrolliert durch ein Öffnen der Einzelzelle 3, beispielsweise mittels einer herkömmlichen Berstöffnung, abgebaut werden oder bei Überschreitung eines bestimmten Drucks muss der Stromfluss in die Einzelzelle 3 und/oder den Zellverbund 1 unterbrochen werden.

Aus der Aktivierung der herkömmlichen Berstöffnung der Einzelzelle 3 resultiert eine Zerstörung der Einzelzelle 3, welche somit nicht wieder verwendbar ist.

Um eine solche Zerstörung der Einzelzelle 3 und somit des gesamten Zellverbunds 1 zu verhindern, ist in den Pressverband des Zellverbunds 1 erfindungsgemäß die zentrale Kraftmesseinrichtung 2 integriert. Dabei wird der Effekt genutzt, dass die axiale Presskraft im Zellverbund 1 an jeder Stelle gleich groß und bekannt ist und bei einer Druckerhöhung in einer beliebigen Einzelzelle 3 des Zellverbunds 1 und deren daraus resultierender Ausbauchung sich die Axialkraft im Zellverbund 1 erhöht. Die nicht näher dargestellte Auswerteelektronik berücksichtigt bei der Kraftmessung die durch die Tellerfedern 9 erzeugte Vorspannung des Zellverbunds 1 und kann dadurch den in den Einzelzellen 3 herrschenden Druck ermitteln.

Die Kraftmesseinrichtung 2 ist stirnseitig zentral, beispielsweise mittig, zwischen der Polplatte 4.2 und der Druckplatte 12 angeordnet. Die Kraftmesseinrichtung 2 ist beispielsweise als Kraftmessdose ausgebildet. In der Druckplatte 12 ist eine Aussparung 18 angeordnet, in welcher ein Abschnitt der Kraftmesseinrichtung 2 anordenbar ist. Dadurch und durch die axiale Presskraft im Zellverbund 1 ist die Kraftmesseinrichtung 2 sicher im Zellverbund 1 gehalten.

Nicht näher dargestellt ist die Kraftmesseinrichtung 2 elektrisch mit einer Auswerteelektronik, welche beispielsweise in eine Batterieelektronik integriert sein kann, verbunden.

In einer alternativen Ausführungsform ist die Kraftmesseinrichtung 2 nicht näher dargestellt als Dehnmessstreifen ausgebildet. Die Druckplatte 12 ist entsprechend ausgeführt.

Übersteigt der Zellinnendruck im Zellverbund 1 einen bestimmten Wert, wird die Batterie von der Auswerteelektronik gesteuert von den Verbrauchern und/oder einer Ladeelektronik getrennt. Dadurch kann der Zellverbund 1 und/oder die nicht näher dargestellte Batterie sicherer und permanent näher an ihrer Leistungsgrenze betrieben werden.

Mit anderen Worten: Während des Betriebs des Zellverbunds 1 führen Veränderungen des Zellinnendrucks einer oder mehrerer Einzelzellen 3 zu einer veränderten Axialkraft im Zellverbund 1, da die relativ dünnen Hüllbleche der Einzelzelle 3 durch eventuellen Überdruck im Inneren der Einzelzelle 3 ausgebaucht werden. Diese veränderte Axialkraft im Zellverbund 1 wird mittels der Polplatte 4.2 auf die Kraftmesseinrichtung 2 übertragen und von der Kraftmesseinrichtung 2 gemessen und an die Auswerteelektronik übertragen. Übersteigt der Zellinnendruck des Zellverbunds 1 einen einstellbaren Wert, wird die Batterie von den Verbrauchern und/oder einer Ladeelektronik getrennt.

In Figur 4 ist schematisch eine Schnittdarstellung einer alternativen Ausführungsform des Zellverbunds 1 aus so genannten Pouchzellen mit zentraler Kraftmesseinrichtung 2 dargestellt. Bei einer Pouchzelle, auch als Coffee Bag Zelle bezeichnet, ist der elektrochemisch wirksame Zellinhalt durch eine Folie umschlossen.

## Patentansprüche

1. Zellverbund (1) mit einer vorgebbaren Anzahl von parallel und/oder seriell miteinander elektrisch verschalteten Einzelzellen (3),
**dadurch gekennzeichnet, dass**
eine Kraftmesseinrichtung (2) im Zellverbund (1) zwischen einer Polplatte (4.2) und einer Druckplatte (12) angeordnet ist.

2. Zellverbund (1) nach Anspruch 1,
**dadurch gekennzeichnet, dass**
die Kraftmesseinrichtung (2) als Kraftmessdose ausgebildet ist.

3. Zellverbund (1) nach Anspruch 1,
**dadurch gekennzeichnet, dass**
die Kraftmesseinrichtung (2) als Dehnmessstreifen ausgebildet ist.

4. Zellverbund (1) nach einem der vorherigen Ansprüche,
**dadurch gekennzeichnet, dass**
die Kraftmesseinrichtung (2) zentral an einer Stirnseite des Zellverbunds (1) angeordnet ist.

## Claims

1. Cell assembly (1) having a predetermined number of individual cells (3) which are electrically connected to each other in parallel and / or in series,
**characterised in that**
a force measuring device (2) is arranged in the cell assembly (1) between a pole plate (4.2) and a pressure plate (12).

2. Cell assembly (1) according to claim 1,
**characterised in that**
the force measuring device (2) is configured as a load cell.

3. Cell assembly (1) according to claim 1,
**characterised in that**
the force measuring device (2) is configured as a strain gauge.

4. Cell assembly (1) according to one of the preceding claims,
**characterised in that**
the force measuring device (2) is arranged centrally on an end face of the cell assembly (1).

## Revendications

1. Ensemble (1) d'élément comprenant un nombre prédéfini d'éléments individuels (3) connectés électriquement les uns aux autres en série et/ou en parallèle, **caractérisé en ce qu'**un dispositif (2) de mesure de force est disposé dans l'ensemble (1) d'éléments entre une joue magnétique (4.2) et une plaque (12) de serrage.

2. Ensemble (1) d'éléments selon la revendication 1, **caractérisé en ce que** le dispositif (2) de mesure de force est conçu en tant que dynamomètre.

3. Ensemble (1) d'éléments selon la revendication 1, **caractérisé en ce que** le dispositif (2) de mesure de force est conçu en tant qu'extensomètre.

4. Ensemble (1) d'éléments selon l'une quelconque des revendications précédentes, **caractérisé en ce que** le dispositif (1) de mesure de force est disposé au centre sur une face avant de l'ensemble (1) d'éléments.
